# EUROPEAN PATENT APPLICATION

(11) **EP 4 776 117 A1**
(43) Date of publication of application: **15.07.2026**
(21) Application number: 25226987.3
(22) Date of filing: 23.12.2025
(51) Int. Cl.: G06F 7/544

(54) **MULTIPLIER CIRCUIT**

(30) Priority: 02.01.2025 FR 2500005
(71) Applicant: Commissariat à l'Energie Atomique et aux Energies Alternatives, 75015 Paris (FR)
(72) Inventor: BOCCO, Andrea, 38054 GRENOBLE CEDEX 09 (FR)
(74) Representative: Cabinet Beaumont

(57) **Abstract**

The present description concerns a circuit configured to perform a multiplication between first and second values each comprising up to a number N of chunks of n bits, comprising:
- a number NMUL of multiplier sub-circuits configured to generate partial products corresponding to a multiplication between one chunk of the first value and one chunk of the second value;
- an adder part configured to generate an intermediate sum, corresponding to the addition of partial products of same significance, and excess bit values;
- an input crossbar circuit configured to select at least one chunk of the first value and at least one chunk of the second value and to provide them to one of the multiplier sub-circuits;
- a control unit configured to indicate which chunks to supply to which multiplier sub-circuit; and
- a parallel adder configured to generate a value corresponding to the product.

## Description

### Technical field

The present disclosure generally concerns multiplier circuits and in particular circuits configured to perform multiplications between high precision data.

### Prior art

Multiplier circuits hardware constraints impose a limitation on the bit-width size of manipulated data. This bit-width size limit is due to circuit timing constraints. The larger the bit-width of the inputs of the multiplier, the lower the maximum frequency the hardware multiplier can achieve. For example, the maximal bit-width size may also be chosen based on the bit-width sizes that are supported by the host processor. For every frequency, there is a maximum bit-width for every arithmetic unit.

There exists a need to improve the architecture of multiplier circuits in order to decrease the latency in multiplications between data, and in particular between high precision data.

### Summary of the invention

An embodiment provides a circuit configured to perform a multiplication operation between a first value and a second value, the first and second values each comprising respectively up to a number N of chunks of n bits, n being an integer greater than or equal to 2, and the multiplication being realized within a number of clock cycles depending on the sizes of the first and second values, the circuit comprising:
- a number NMUL of multiplier sub-circuits, NMUL being an integer, the multiplier sub-circuits being configured to generate partial products, each partial product corresponding to a multiplication between one chunk among the chunks of the first value and one chunk among the chunks of the second value;
- an adder part configured to generate an intermediate sum and corresponding excess bit values if any, based on the partial products received from the multiplier sub-circuits, each intermediate sum corresponding to the addition of a group of partial products of same significance;
- an input crossbar circuit configured to select during one clock cycle at least one chunk among the chunks of the first value and at least one chunk among the chunks of the second value and to provide them to at least one of the multiplier sub-circuits ;
- a control unit configured to indicate, to the input crossbar circuit, which chunks to supply to which of the multiplier sub-circuits and configured to control the use of the multiplier sub-circuits and consequently the adder part by providing to the multiplier sub-circuits, during at least one clock cycle, chunks involved in partial products of different groups of partial products; and
- a parallel adder configured to generate a value corresponding to the product between the first and second values by adding the intermediate sums and the excess bit value generated by the adder part.

According to an embodiment, the groups of partial products are not all of the same size, and the control unit is configured to:
- during a first clock cycle, select chunks involved in a group of partial products containing the highest number of partial products; and
- during a second clock cycle following the first clock cycle, select chunks involved in a group of partial products containing less partial products.

According to an embodiment, the NMUL multiplier sub-circuits are configured to generate the NMUL first partial products in response to the reception, by the circuit, of a first significant edge of a clock signal, and wherein the adder part is configured to generate the first intermediate sum in response to the reception of a second significant edge of the clock signal, subsequent to the first significant edge, the NMUL multiplier sub-circuits being configured to generate second partial products in response to the reception of the second significant edge of the clock signal.

According to an embodiment, the adder part comprises one or more adder trees, each adder tree comprising an adder sub-circuit, and further comprising:
- a first intermediate crossbar circuit configured to receive the first partial products generated by the NMUL multiplier sub-circuits and to supply them to different inputs of the adder part;
- a second intermediate crossbar circuit (618) configured to receive the inputs and outputs of each adder sub-circuit of the adder part, and to provide intermediate sums to an intermediate memory; and
- the intermediate memory configured to store the first intermediate sum and the first excess bits generated by the adder part and to supply them to the parallel adder.

According to an embodiment, the adder part is configured to generate a maximum of 2N-1 intermediate sums and 2N-2 excess bits values as a result of the reception of a number log2(NMUL) of clock signals, the intermediate memory being configured to supply the 2N-1 intermediate sums and the 2N-2 excess bits values to the parallel adder, the parallel adder being configured to output the product between the first and second values by adding the 2N-1 intermediate sums and the 2N-2 excess bits values.

According to an embodiment, the intermediate memory comprises first, second, and third regions and wherein the adder part is configured to store at most a number N of intermediate sums sj, with j being an odd integer, in the first region and at most number N-1 of intermediate sums sk, with k being an even integer, in the second region and to store the excess bits values in the third region and wherein:
- the n least significant bits of an intermediate sum sk, among the at most N intermediate sums, stored in the second region, are stored in a same memory column as the n most significant bits of an intermediate sum sj stored in the first region, with k=j+1;
- the n most significant bits of an intermediate sum sk stored in the second region are stored on a same column memory as the n least significant bits of an intermediate sum sj stored in the first region, with k+1=j;
- excess bits values associated to an intermediate sum sk being placed in the same row as the most significant bits of an intermediate sum sk ;
- excess bits values associated to an intermediate sum sj being placed in a different adjacent row, corresponding to the row of intermediate sum sj+1 ; and

wherein the parallel adder comprises a plurality of sub-adders, each being connected to the intermediate memory for receiving the values stored in the first, second and third regions in the same column, and
at least one column of the intermediate memory is associated with two sub-adders, one no-carry-sub-adder providing the addition of the received values, and a with-carry-sub-adder providing the addition of the received values plus one, and
the outputs of the no-carry-sub-adder and the with-carry-sub-adder are connected to at least one multiplexer providing an output according to the carry signal obtained by an addition made by a sub-adder associated with another column.

According to an embodiment, the control unit is clocked by the clock signal and is configured to:
- on reception of the first significant edge of the clock signal, control the input crossbar circuit to supply a chunk of the first value and a chunk of the second value to a multiplier sub-circuit; and
- on reception of the second significant edge of the clock signal, subsequent to the first significant edge, cause the supply of a partial product, generated by the multiplier sub-circuit, to the adder part and control the input crossbar circuit to supply another chunk of the first value and another chunk of the second value to the multiplier sub-circuit.

According to an embodiment, the control unit is configured to control the input crossbar circuit directly or via the transmission of supplementary control bits comprised in the chunks of the first and second values.

According to an embodiment, the control unit is further configured to, on reception of the first and/or of the second significant edge of the clock signal, control the input crossbar circuit to supply another chunk of the first value and another chunk of the second value to another multiplier sub-circuit.

According to an embodiment, n is equal to at least 2 and for example to 16 or 32 or 64 or 128.

According to an embodiment, the integer NMUL is equal to an integer between 2 and *N*².

According to an embodiment, the adder part comprises one or more adder trees each adder tree comprises standard adder circuits arranged in a tree fashion and wherein the adder part comprises intermediate adder circuits and a plurality of multiplexers placed so as to create reconfigurable adder trees configured to perform addition operations in parallel for different group of partial products.

One embodiment provides a method for performing a multiplication operation between a first value and a second value, the first and second values each comprising respectively up to a number N of chunks of n bits, n being an integer greater than or equal to 2, and the multiplication being realized within a number of clock cycles depending on the size of the first and second values, the method comprising:
- generating partial products, each partial product corresponding to a multiplication, by a number NMUL of multiplier sub-circuits, NMUL being an integer, between one chunk among the chunks of the first value and one chunk among the chunks of the second value;
- generating, by an adder part, an intermediate sums and corresponding excess bit values if any, based on the partial products received from the multiplier sub-circuits, each intermediate sum corresponding to the addition of a group of partial products of same significance;
- selecting, by an input crossbar circuit during one clock cycle, at least one chunk among the chunks of the first value and at least one chunk among the chunks of the second value and providing them to at least one of the multiplier sub-circuits ;
- indicating, by a control unit, to the input crossbar circuit, which chunks to supply to which multiplier sub-circuit and controlling the use of the multiplier sub-circuits and consequently the adder part by providing to the multiplier sub-circuit, during at least one clock cycle, chunks involved in partial products of different groups of partial products; and
- generating, by a parallel adder, a value corresponding to the product between the first and second values by adding the intermediate sums and the excess bit value generated by the adder part.

According to an embodiment, the control unit is controlled by a clock signal and wherein the control unit is further configured to:
- on reception of a first significant edge of the clock signal, control the input crossbar circuit to supply a chunk of the first value and a chunk of the second value to a multiplier sub-circuit; and
- on reception of a second significant edge of the clock signal, subsequent to the first significant edge:
   cause the supply of a partial product, generated by the multiplier sub-circuit based on the chunks, to adder part; and
   control the input crossbar circuit to supply another chunk of the first value and another chunk of the second value to a multiplier sub-circuit.

According to an embodiment, the method above further comprises:
- generating 2N-1 intermediate sums and of 2N-2 excess bits values by the adder part in response to the reception of at least N clock signals, and their storage in an intermediate memory; and
- supplying the 2N-1 intermediate sums and the 2N-2 excess bits values to a parallel adder, the parallel adder being configured to generate the product between the first and second values by adding the 2N-1 intermediate sums and the 2N-2 excess bits values. Another embodiment provides a circuit configured to perform a multiplication operation between a first value and a second value, the first and second values each comprising respectively up to a number N of chunks of n bits, n being an integer greater than or equal to 2, the circuit comprising:
- a number NMUL of multiplier sub-circuits, NMUL being an integer, configured to generate first partial products, each first partial product corresponding to a multiplication between one chunk among the chunks of the first value and one chunk among the chunks of the second value;
- an adder part configured to generate a first intermediate sum and first excess bit values, based on the first partial products; and
- a parallel adder configured to generate a value corresponding to the product between the first and second values based on the first intermediate sum and on the first integer bit generated by the first adder circuit and the second processing circuit.

An embodiment provides a method for the multiplication between a first and a second value, by a circuit, the first and second values each comprising up to a number of N chunks of n bits, N being an integer greater than or equal to 2 and n being an integer, the method comprising:
- the generation of first partial products, by NMUL multiplier sub-circuits, NMUL being an integer, of the circuit, each partial product corresponding to a multiplication between one chunk among the chunks of the first value and one chunk among the chunks of the second value;
- the generation of a first intermediate sum and of a first excess bits value, by an adder part of the circuit, based on the first partial products; and
- the generation of a value corresponding to the product between the first and second values, by a parallel adder of the circuit, based on the first intermediate sum and on the first integer bit.

### Brief description of the drawings

The foregoing features and advantages, as well as others, will be described in detail in the rest of the disclosure of specific embodiments given as an illustration and not limitation with reference to the accompanying drawings, in which:
Figure 1 illustrates a multiplication between two input data values, according to an embodiment of the present disclosure;
Figure 2A illustrates an example of scheduling sub-multiplications of mantissa chunks, according to an embodiment of the present disclosure;
Figure 2B illustrates an example of micro-instructions scheduling comprised in a control unit, according to an embodiment of the present disclosure;
Figure 2C illustrates latency of a multiplication between two data values comprising chunks, according to an embodiment of the present disclosure;
Figure 3A illustrates an example of micro-instructions scheduling, according to a further embodiment of the present disclosure;
Figure 3B illustrates an example latency of a multiplication between two data values comprising mantissa chunks, according to another embodiment of the present disclosure;
Figure 4 is a diagram illustrating the addition, by an accumulator, of intermediate sums; and
Figure 5 illustrates a circuit configured for the multiplication of two data values, according to an embodiment of the present disclosure.

### Description of embodiments

Like features have been designated by like references in the various figures. In particular, the structural and/or functional features that are common among the various embodiments may have the same references and may dispose identical structural, dimensional and material properties.

For clarity, only those steps and elements which are useful to the understanding of the described embodiments have been shown and are described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements, such as buffers.

In the following description, where reference is made to absolute position qualifiers, such as "front", "back", "top", "bottom", "left", "right", etc., or relative position qualifiers, such as "top", "bottom", "upper", "lower", etc., or orientation qualifiers, such as "horizontal", "vertical", etc., reference is made unless otherwise specified to the orientation of the drawings.

Unless specified otherwise, the expressions "about", "approximately", "substantially", and "in the order of" signify plus or minus 10%, preferably of plus or minus 5%.

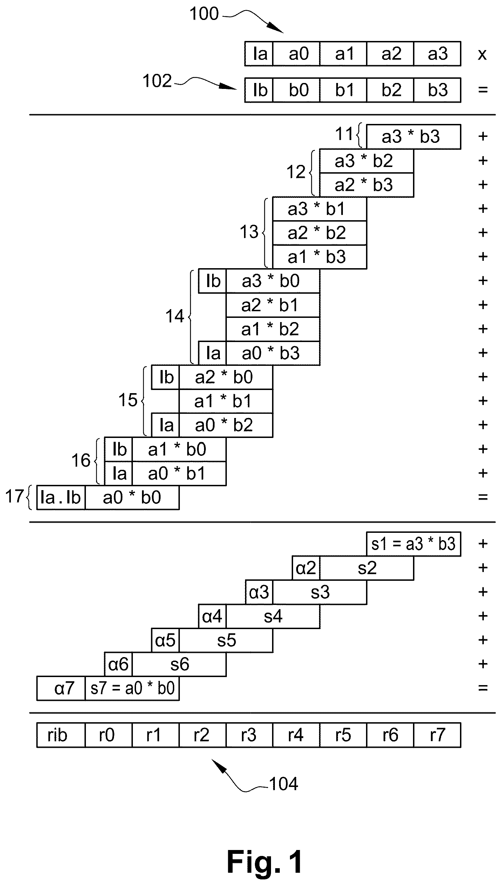

Figure 1 illustrates a multiplication between two mantissas 100 and 102 of two operands A and B. In particular, Figure 1 illustrates Comba's multiplication algorithm. The two mantissas 100 and 102 are fixed-point values. As an example, the mantissa 100 comprises one or more integer bits Ia and the mantissa 102 comprises one or more integer bits Ib. The mantissa 100 further comprises, for example, 4 chunks a0, a1, a2 and a3, each comprising a plurality n of bits. As an example, a0 comprises the n most significant bits of the decimal part of the mantissa 100 and a3 comprises the least significant n bits of the decimal part of the mantissa value 100. Similarly, the mantissa 102 further comprises 4 chunks b0, b1, b2 and b3, each comprising n bits. As an example, b0 comprises the n most significant bits of the decimal part of the mantissa 102 and b3 comprises the least significant n bits of the decimal part of the mantissa value 102. In general, a mantissa as described herein comprises an integer part, made of a number y of bits, and a number N of n-bit chunks, of which L chunks are valid chunks. In particular, the integer N indicates the maximum number of n-bit chunks. Thus, a mantissa that has fewer than N n-bit chunks is still represented by the N n-bit chunks, but only L of these chunks are valid, for example corresponding to chunks having non-zero values. Furthermore, when multiplying two mantissas, for example the mantissas 100 and 102, even if they have the same number N of available n-bit chunks, these two mantissas do not necessarily have the same number of integer bits as each other, or the same number L of valid n-bit chunks as each other. In the following, integers La and Lb respectively refer to the L n-bit chunks that are valid for the operands A and B respectively. In the specific case illustrated by Figure 1, the number of valid chunks of each of the two operands is equal to 4. For example, for an operand C with N=4 and having two valid n-bit chunks c0 and c1, i.e. L=1, C is represented by an integer part and 4 chunks c0, c1c2 and c3, among which the chunks c2 and c3 for example comprise only bits equal to 0 or are ignored for the multiplication. When multiplying operands A and C, the partial products containing c2 and c3 are null by definition.

Moreover, integers *yₐ* and *y_{b}* respectively refer to the lengths of the integer parts Ia and Ib of the operands A and B.

In one embodiment, the number n of bits in each chunk is equal to 16 or 32 or 64 or 128, but could more generally be equal to any integer value of 2 or more.

In one embodiment, the number NMUL of multipliers is equal to an integer between 2 and *N*².

The multiplication between the mantissas 100 and 102 results in a mantissa 104. The decimal part of the mantissa 104 for example comprises 8 chunks r0 to r7, each for example comprising n bits, and a chunk rib corresponding to an integer part of the mantissa 104, for example depending on the *yₐ* bits of the integer part Ia and on the *y_{b}* bits of the integer part Ib.

As an example, the multiplication of two mantissas comprises the calculation of a plurality of partial products. Each partial product corresponds to the product between a chunk of the mantissa 100 and another chunk of the mantissa 102. In particular, for two mantissas comprising a number L of chunks, the multiplication comprises the calculation of *L*² partial products. In the example of Figure 1, the 16 partial products correspond to products involving the chunks a0 to a3 and b0 to b3 and the integer parts Ia and Ib.

As an example, the partial products are grouped in groups 11 to 17, each comprising between 1 to 4 partial products, each partial product in a same group having a same significance. In particular, the significance of a group contributes to the place that the partial product will take in the final product, in terms of most or least significant bits. For example, the partial product of group 11 will contribute to the least significant bits of the final product, while the partial product of group 17 will contribute to the most significant bits of the final product. Groups 11 and 17 each comprises a single partial product (*Ib ** 2*ⁿ* + *b*0) *** (*Ia* * *2ⁿ + a*0) and a3*b3 respectively. In particular, the partial product of group 17 is (*Ia* * 2*ⁿ* + *a*0) ** (Ib* * 2*ⁿ + b*0). Groups 12 and 16 each comprise two partial products a3*b2, a2*b3, and *a*1* (*fb ** 2*ⁿ + b*0), (*Ia* * 2*ⁿ* + *a*0) *** b1 respectively. Groups 13 and 15 each comprise three partial products a3*b1, a2*b2, a1*b3, and *a*2 * *(Ib ** 2*ⁿ + b0),* a1*b1, and *b*2 * (*Ia* * 2*ⁿ* + *a*0), respectively. Group 14 comprises the four partial products *a*3 * (*Ib* * 2*ⁿ + b*0), a2*b1, a1*b2, and *b*2 * (*fa* * 2*ⁿ + a*0). In the following, any integer bit Ia or Ib denoted as separated by the sign "·", with a chunk product, refers to the concatenation as described above. In particular, the multiplications involving the chunk a0 and/or the chunk b0 are further based on the corresponding integer bit Ia and/or Ib. The sizes of groups that does not involve integer parts Ia and Ib are of 2n, the sizes of the groups involving only the integer part Ia are of *yₐ*+2*n,* the sizes of the groups involving only the integer part Ib are of *y_{b}* + 2n, and the sizes of the groups involving both of the two integer parts Ia and Ib are of (*yₐ* + *y_{b}*) + 2*ⁿ.*

Referring again to the example of Figure 1, intermediate sums s1 to s7 correspond to the 2n least significant bits of the resulting addition of the partial products of a same group. As an example, the intermediate sum s1 corresponds to the 2n bits of the partial product a3*b3, and the intermediate sum s2 is equal to the 2n least significant bits of the sum of the partial products of group 12. For each group sum, parts *α*2 to *α*7 are referred to herein as excess bits and respectively correspond to the bits of the sum of each partial product that exceed the 2n bits of the intermediate sum s2 to s7. In other words, each sum of the partial products of a same group is a value coded by 2*n*+ β bits, where β is an integer representing the number of excess bits, possibly equal to 0, and depending on the group. For example, β is always equal to zero for the sum of group 11. For the sums of the other groups, the integer β depends on the length of the integer parts Ia and/or Ib and on the number of elements in the group. In particular, β is equal to *maxsize*(*Ia, Ib*) *+ ceil(log2(K)),* where K is the size of the groups 11 to 17.

Generally, there are as many intermediate sums as groups of partial products, that is, (*La +* 1) * (*Lb* + 1) - 1 in the case where the two mantissas comprise L valid n-bit chunks. Each intermediate sum sm, 1 ≤ m ≤ (*La +* 1) ** (Lb +* 1) - 1, corresponds to the 2n least significant bits of the sum of the elements of group 1m. One or more integer bits α*m* correspond to the excess bits than exceed 2n bits. In particular, for each 1 ≤ m ≤ (*La +* 1) ** (Lb +* 1) - 1, the concatenation of αm with sm corresponds of the sum of the partial products of group 1m.

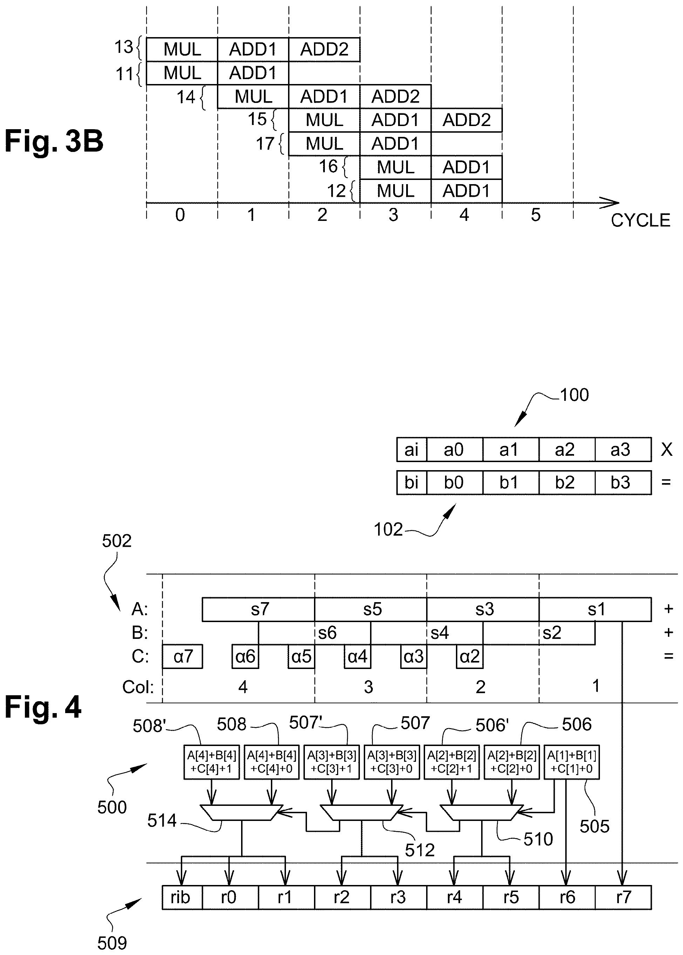

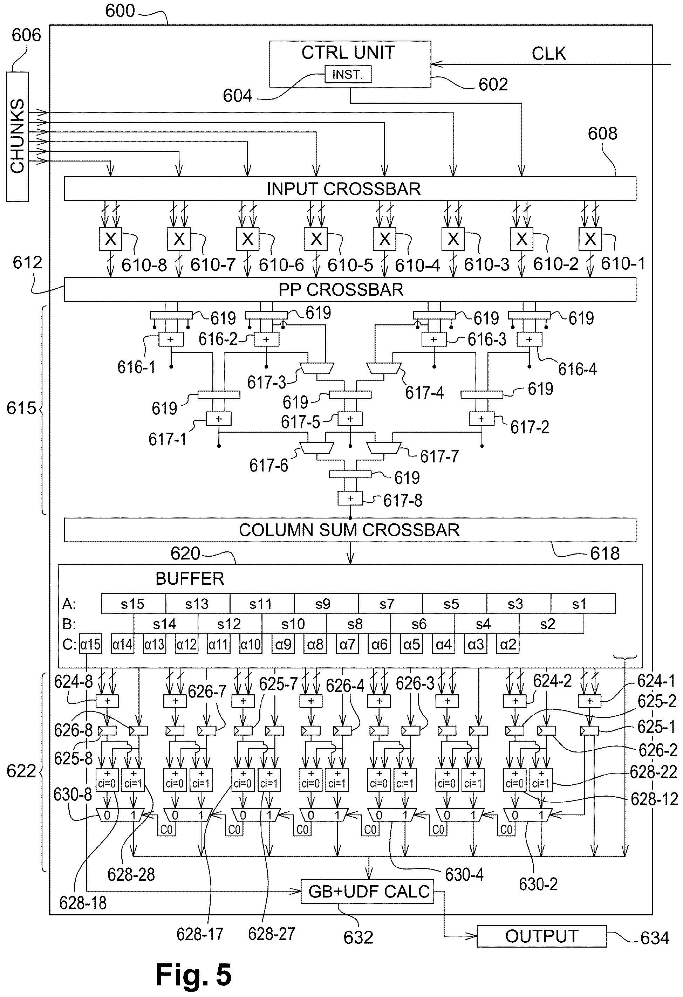

As an example, the n least significant bits of intermediate sum s1 correspond to the chunk r7 representing the n least significant bits of the multiplication of the two mantissas. The n most significant bits of intermediate sum s1 are for example added to the n least significant bits of intermediate sum s2 to generate the n-bit chunk r6, taking into account the carry propagation among the addition. Indeed, while adding the n most significant bits of intermediate sum s1 to the n least significant bits of intermediate sum s2, a carry bit may arise. In particular, chunks r0 to r7 are n-bit chunks, corresponding to the n least significant bits of an addition between the n most significant bits of an intermediate sum with the n least significant bits of another intermediate sum and involving carry bits arising from the addition of the intermediate sums. A propagation of these carry bits is described in further detail in relation with Figures 4 and 5.

Generally, for mantissas comprising L n-bit chunks, the n least significant bits of an intermediate sum s(i+1) are added to the n most significant bits of intermediate sum si. Thus, each of these sums corresponds to an n-bit chunk r of the multiplication of the two mantissas and to an integer bit to be taken into account for the calculation of the chunk based on sums s(i+1) and s (i+2). In the state of the art, these intermediate sums are summed iteratively, one after the other propagating the carry among the accumulations.

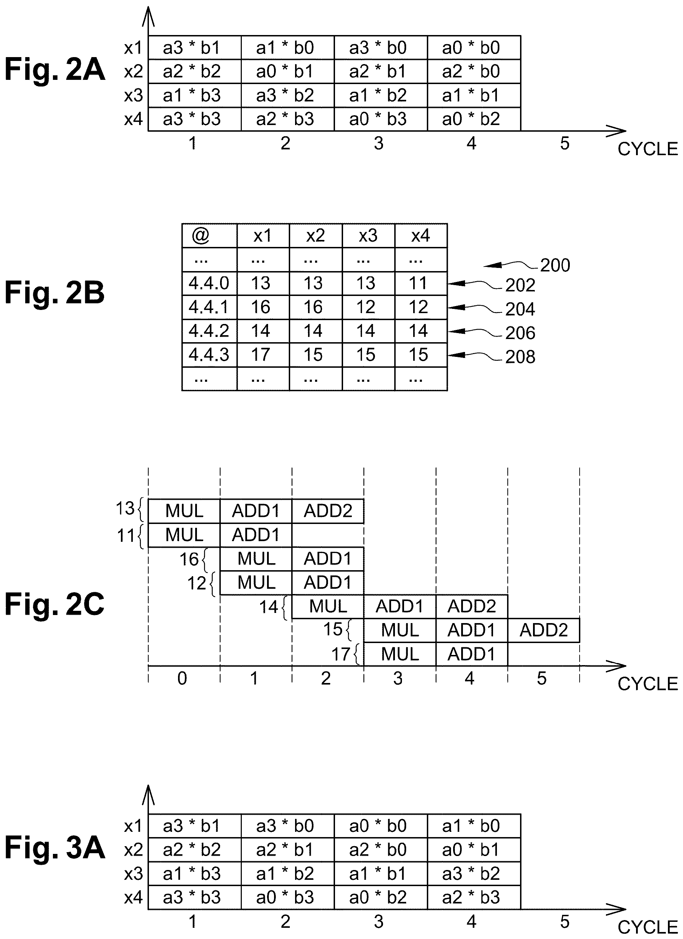

Figure 2A illustrates an example of scheduling partial multiplications of mantissa chunks, according to an embodiment of the present disclosure. According to an embodiment, the multiplications between two mantissas are performed by a general circuit. According to an embodiment, the general circuit comprises a number NMUL of multiplier circuits, NMUL being an integer higher than or equal to 2. In some examples, the integer NMUL is equal to the maximum number N of n-bit chunks in mantissas. In another example, the integer NMUL is equal to *N*². More generally, the number NMUL of multiplier circuits is an integer between 2 and *N*².

In the state of the art, partial products are calculated group per group, two distinct groups being processed during at least two distinct cycles. In the example described in relation with Figure 1, in the case where NMUL is at least equal to 4, the only partial product related to group 11, that is to say the multiplication a3*b3, is calculated by one multiplier circuit in a first cycle. The two partial products related to group 12, that is to say the multiplication a3*b2 and a2*b3, are calculated, for example, by two multiplier circuits in a second cycle, for example following the first cycle. The three partial products, related to group 13, are then processed in a third cycle, following the second cycle. The fourth partial products related to the group 14 are then processed in a fourth cycle, for example following the third cycle, etc. In this case, it takes 7 cycles to compute each partial product of each group 11 to 17.

According to an embodiment, the NMUL multiplier circuits are configured to operate in parallel. As an example, in the case where NMUL is equal to 4, four multiplier circuits x1, x2, x3, and x4 are configured to calculate the partial products of one or a plurality of groups 11 to 17, described in relation with Figure 1 and with N=4, in parallel and over a plurality of calculation cycles.

As an example, multipliers x1 to x4 are configured to calculate, in a first cycle (CYCLE), the partial products of groups 11 and 13. As an example, multipliers x1, x2, and x3 are configured to calculate the partial products of group 13 and multiplier x4 is configured to calculate the partial product of group 11. As an example, during this first cycle, multiplier circuits x1, x2, x3, and x4 are respectively configured to calculate products a3*b1, a2*b2, a1*b3, and a1*b3.

As an example, multipliers x1 to x4 are configured to calculate, in a second calculation cycle, for example consecutive to the first calculation cycle, the partial products of groups 12 and 16. As an example, multipliers x1 and x2 are configured to calculate the partial products of group 12 and multipliers x3 and x4 are configured to calculate the partial products of group 12. As an example, multipliers x1, x2, x3, and x4 are respectively configured to calculate partial products a1*Ib· b0, Ia·a0*b1, a3*b2, and a2*b3.

As an example, multipliers x1 to x4 are configured to calculate, in a third calculation cycle, for example consecutive to the second calculation cycle, the partial products of group 14. As an example, multipliers x1, x2, x3, and x4 are respectively configured to calculate partial products a3*Ib· b0, a2*b1, a1*b2, and Ia·a0*b3.

As an example, multipliers x1 to x4 are configured to calculate, in a fourth calculation cycle, for example consecutive to the third calculation cycle, the partial products of groups 15 and 17. As an example, multiplier x1 is configured to calculate the partial product of group 17 and multipliers x2, x3, and x4 are configured to calculate the partial products of group 15. As an example, multipliers x1, x2, x3, and x4 are respectively configured to calculate partial products Ia·a0* Ib·b0, a2*Ib· b0, a1*b1, and Ia·a0*b2.

Groups 11 to 17 are thus rearranged so that the four multipliers x1 to x4 all operate in parallel over a plurality of calculation cycles. Thus, the 16 partial products are calculated, by the four multipliers x1 to x4, over four calculation cycles, for example, a calculation cycle lasting one or more clock cycles. In this example, no multiplier circuit is inactive during any of the calculation cycles.

In the example where the number of valid chunks *L_{A}* and *L_{B}* are equal to the number NMUL of multiplier circuits, the 2N-1 groups of partial products are grouped so that, at each cycle, the NMUL multipliers each calculate a partial product within the same group. As an example, a calculation cycle is reserved for the calculation of the NMUL partial products of the group comprising NMUL partial products. As an example, the partial product of one of the two groups, for example groups 11 and 1(2*NMUL-1), for example group 1(2*NMUL-1) is the group 17 in the case NMUL is equal to 4, is calculated by a multiplier over the same cycle as the calculation of N-1 partial products belonging to one of the groups comprising N-1 partial products, for example groups 13 and 1(NMUL-3). For example, if N=4, and NMUL=8, in a first clock cycle, the partial products of groups 14, 13 and 11 are computed. In a second clock cycle, the partial products of groups 15, 12, 16, and 17 are computed.

As an example, each calculation cycle is triggered by the reception, by the general circuit, of a significant edge of a clock signal. The term "significant edge" designates one of the edges of the clock cycle configured to trigger operations carried out by the general circuit. These significant edges may correspond to either rising or falling edges, or to both rising and falling edges.

Figure 2B illustrates an example of instructions 200 stored in a memory or coded in logic, for example, by a finite state machine, of a control unit of the multiplier circuits, according to an embodiment of the present disclosure. As an example, instructions 200 enable to supply chunks of each of the mantissas to the multiplier circuits.

For example, the instructions 200 comprise a plurality of micro-instructions stored in a read-only memory (ROM). The addresses of the micro-instructions are, for example, defined such that, by knowing the numbers of valid chunks *Lₐ* and *L_{b},* it is possible to deduce a first address to be executed. Every micro-instruction for example comprises information indicating which chunks are to be multiplied by each of the multiplier circuits. Each micro-instruction for example also comprises further information associated with the addition of the partial products. As an example, the address of a micro-instruction has the form *L_{A}.L_{B}.Nb_{micro},* where *Nb_{micro}* corresponds to the number of the micro-instruction. For example, in the case where N=NMUL=4, La=0, Lb=3, the micro-instructions for example comprise only one micro-instruction. For example, in the case where N=NMUL=4, La=3, Lb=3, the micro-instructions for example comprise only 4 micro-instruction.

In the example of the operands A and B, each comprising 4 valid chunks, and where the general circuit comprises 4 multiplier circuits, an instruction line 202, for example stored at an address (@) 4.4.0 of a memory, for example a read-only memory (ROM), of the general circuit, internal or external to the general circuit, controls the supply of the chunks involved in the calculation of the partial products of group 13 to multipliers x1, x2, and x3 as well as the supply of the chunks involved in the partial products of group 11 to multiplier x4. An instruction line 204, for example stored at an address 4.4.1 of the memory, controls the supply of the chunks involved in the calculation of the partial products of group 16 to multipliers x1 and x2 as well as the supply of the chunks involved in the calculation of the partial products of group 12 to multipliers x3 and x4. An instruction line 206, for example stored at an address 4.4.2 of the memory, controls the supply of the chunks involved in the calculation of the partial products of group 14 to multipliers x1, x2, x3, and x4. An instruction line 208, for example stored at an address 4.4.3 of the memory, controls the supply of the chunks involved in the calculation of the partial product of group 17 to multipliers x1 as well as the supply of the chunks involved in the calculation of the partial products of group 15 to multipliers x2, x3, and x4.

As an example, instructions 202 to 208 are transmitted to the multiplier circuits as a result of the reception, for example by the general circuit, of consecutive significant edges of the clock signal. Moreover, instructions 202 to 208 further comprise supplementary information concerning the path of each numerical data in the general circuit.

Addresses 4.4.0 to 4.4.3 are given as an example, and are of course non-limiting. Similarly, the order of the instructions, as well as the groupings, for example of group 13 with group 11 etc., are given as an example and are of course non-limiting.

Figure 2C illustrates an example of scheduling by mean of a Gantt diagram of the micro-instructions within the multiplier circuit pipeline, according to an embodiment of the present description. In particular, Figure 2C illustrates a calculation of the partial products and the intermediate sums described in relation with Figure 1 and under partial control of instructions 200. In particular, the order of the partial products illustrated in relation with Figure 2C is the same as that described in relation with Figure 2A.

As an example, during a first calculation cycle (CYCLE), multipliers x1 to x4 calculate the partial products (MUL) associated with groups 11 and 13. During a second calculation cycle, multipliers x1 to x4 then calculate the partial products (MUL) associated with groups 12 and 16. During this second cycle, the general circuit is further configured to calculate the sums (ADD1, ADD2) of the partial products. As an example, the general circuit further comprises one or more adder trees configured to add the partial products, an example of which is described later in relation with Figure 5. As an example, an adder tree is configured to, during the second calculation cycle, generate the intermediate sum s1. As an example, the intermediate sum s1 is then stored in a memory of the general circuit. Further, during the second cycle, another adder tree is configured to take as an input the three partial products of group 13 and to generate a portion of the intermediate sum s3. As an example, this other adder tree is configured to generate the intermediate sum s3 and the excess bits α3, over two calculation cycles. In other words, during a third calculation cycle, the other adder tree is configured to generate the intermediate sum s3 and the excess bits α3 from the sums obtained during the second calculation cycle. As an example, the intermediate sum s3 and the excess bits α3 are then stored in a memory of the general circuit.

As an example, during the third calculation cycle, the multipliers x1 to x4 calculate the partial products associated with group 14. For example, during the third cycle, the adder trees are further configured to calculate intermediate sums s2 and s6 and the excess bits *α*2 and α6, based on the partial products generated during the second cycle. The intermediate sums s2 and s6 and their excess bits *α*2 and α6 being each generated based on two partial products, a single cycle is sufficient for their calculation. As an example, after the third cycle, the intermediate sums s1, s3, s2, and s6 and the and the excess bits α3, α2 and α6 are stored in the memory.

As an example, in a fourth calculation cycle, multipliers x1 to x4 calculate the partial products associated with groups 15 and 17. During the fourth calculation cycle, a first portion of the intermediate sum s4 is for example calculated by one of the adder trees. Indeed, the intermediate sum s4 being equal to the sum of four partial products, its calculation is performed over two calculation cycles. Thus, in a fifth calculation cycle, intermediate sum s4 and excess bits α4 are generated.

The fifth calculation cycle further comprises, for example, the generation of the intermediate sum s7 and the excess bits α7, corresponding to partial product Ia· a0* Ib·b0, and its storage in the memory. The fifth calculation cycle for example further comprises the generation of a first portion of the intermediate sum s5, based on three partial products. As an example, intermediate sum s5 and the excess bits α5 have finished being calculated by one of the adder trees in a sixth calculation cycle. Once generated, the intermediate sum s5 and excess bits α5 are, for example, stored in the memory.

In the example illustrated in Figure 2B, intermediate sums s1 to s7 and excess bits α2 to α7 are obtained in 6 calculation cycles. As an example, each calculation cycle corresponds to a duration between two significant edges of a clock signal received by the general circuit.

The size of an *αi* is ceil(log2(K))+ max(size(Ia),size(Ib)), where K is the number of elements in the group, size(Ia)=*yₐ* is set to 0 if Ia is not used in the group and size(Ib)=*y_{b}* is set to 0 if Ib is not used in the group. Then, for *α7,* the size is size (Ia) +size (Ib) *= yₐ + y_{b},* indeed, for α7 the number of element in the group is equal to 1, so the log2 is equal to zero.

In another examples, for example when the general circuit comprises more than MULN=4 multiplier sub-circuits, the addition of the partial products is performed over at most log2(N) clock cycles.

Generally, depending on how many partial products are to be added, the latency introduced by the adder tree varies. For a number K of partial products to be added, the latency for the addition of the K partial products is equal to ceil(log2(K)). This is the only variable part in latency in the general circuit. Rescheduling the instructions so that all the longest latency additions occur at the beginning helps to reduce the overall latency.

Figure 3A illustrates another example of sub-multiplications of mantissa chunks for the calculation of partial products, according to an embodiment of the present disclosure.

As an example, multipliers x1 to x4 are configured to calculate, during a first calculation cycle (CYCLE), the partial products of groups 11 and 13, described in relation with Figure 1. As an example, the multipliers x1, x2, and x3 are configured to calculate the partial products of group 13 and the multiplier x4 is configured to calculate the partial product of group 11. As an example, during this first calculation cycle, multiplier circuits x1, x2, x3, and x4 are respectively configured to calculate the partial products a3*b1, a2*b2, a1*b3, and a1*b3.

As an example, the multipliers x1 to x4 are configured to, in a second calculation cycle, for example consecutive to the first calculation cycle, calculate the partial products of group 14. As an example, multipliers x1, x2, x3, and x4 are respectively configured to calculate the partial products a3*Ib· b0, a2*b1, a3*b2, and Ia·a0*b3.

As an example, the multipliers x1 to x4 are configured to, in a third calculation cycle, for example consecutive to the second calculation cycle, calculate the partial products of groups 17 and 15. As an example, the multiplier x1 is configured to calculate the partial product of group 17 and the multipliers x2, x3, and x4 are configured to calculate the partial products of group 15. As an example, the multipliers x1, x2, x3, and x4 are respectively configured to calculate the partial products Ia·a0*Ib·b0, a2*Ib· b0, a1*b1, and Ia·a0*b2.

As an example, the multipliers x1 to x4 are configured to calculate, in a fourth calculation cycle for example consecutive to the third calculation cycle, the partial products of groups 16 and 12. As an example, the multipliers x1 and x2 are configured to calculate the partial products of group 16 and the multipliers x3 and x4 are configured to calculate the partial products of group 12. As an example, the multipliers x1, x2, x3, and x4 are respectively configured to calculate the partial products Ib·a1*b0, Ia·a0*b1, a3*b2, and a2*b3.

If the number NMUL of multiplier circuits is bigger than the maximum number of chunks N, then the remaining multiplier circuits are for example fed with chunks to compute partial products of other groups. All of the instructions are then for example re-ordered. Indeed, several groups are to be summed together. The priority is given to the operation for which the log2 of the size of the concerned groups is maximum. For example, the log2 of the size of groups 12 and 16 is equal to 1 and the log2 of the size of groups 14 and 15 is equal to 2. Figure 3B illustrates the re-ordering of the instructions, in order to prioritize the sum of groups 14 and 15.

In contrast with the method for calculating the partial product in the state of the art, the use of the multiplier circuits is configured to perform, in one cycle, as many partial products related to one or more groups as possible. For example, in the state of the art, one cycle was dedicated to the only calculation of the partial product related to group 11. In the case where NMUL=4, there were three multiplier circuits that were vacant. In the present embodiment, these three multiplier circuits are used for the calculation of a group having three partial products.

Having as many multiplier circuits as possible busy per cycle allows to increase the throughput of the general circuit.

Figure 3B illustrates another example of execution of the calculation of intermediate sums, according to an embodiment of the present description. In particular, Figure 3B illustrates a calculation of the intermediate sums described in relation with Figure 1, where the partial products are computed as described in relation with Figure 3A. Figure 3B illustrates a re-ordering algorithm to reduce the latency of the operation by switching the execution of certain micro-instructions in the memory in order to advance the execution of instructions which take relatively long to be executed.

As an example, during a first calculation cycle (CYCLE), the multipliers x1 to x4 calculate the partial products (MUL) associated with the groups 11 and 13. During a second calculation cycle, the multipliers x1 to x4 then calculate the partial products (MUL) associated with group 14. During this second calculation cycle, the general circuit is further configured to calculate sums (ADD1, ADD2). As an example, an adder tree is configured to, during the second calculation cycle, generate the intermediate sum s1. As an example, the intermediate sum s1 is then stored in a memory of the general circuit. Further, during the second calculation cycle, another adder tree is configured to take as an input the three partial products of group 13 and to generate a portion of the intermediate sum s3. As an example, this other adder tree is configured to generate the intermediate sum s3 and the excess bits α3 over two cycles. In other words, during a third calculation cycle, the other adder tree is configured to generate the intermediate sum s3 and the excess bits α3 based on the sum portion obtained during the second calculation cycle. As an example, the intermediate sum s3 and the excess bits α3 are then stored in a memory of the general circuit.

As an example, during the third calculation cycle, multipliers x1 to x4 calculate the partial products associated with groups 15 and 17. As an example, during the third calculation cycle, the adder trees are further configured to calculate a portion of the intermediate sum s4, based on the four partial products generated during the second calculation cycle.

As an example, in a fourth calculation cycle, the multipliers x1 to x4 calculate the partial products associated with groups 12 and 16. During the fourth cycle, the intermediate sum s4 and the excess bits α4 are for example calculated, based on the portion generated during the third calculation cycle. Indeed, the intermediate sum s4 being equal to the sum of four partial products, its calculation is performed over two cycles.

The fourth calculation cycle for example further comprises the generation of the intermediate sum s7 and the excess bits α7, corresponding to the partial product Ia·Ib·a0*b0, and its storage in the memory. The fourth calculation cycle for example further comprises generation of a first portion of the intermediate sum s5, based on three partial products. As an example, the intermediate sum s5 and the excess bits α5 have finished being calculated by one of the adder trees in a fifth calculation cycle. Once generated, the intermediate sum s5 and excess bits α5 are, for example, stored in the memory.

The fifth calculation cycle for example further comprises the generation of the intermediate sums s2 and s6 and their associated bits α2 and α6. These two intermediate sums being each obtained based on two partial products, a single calculation cycle is sufficient for their calculation.

In the example illustrated in Figure 3B, the intermediate sums s1 to s7 and the excess bits α2 to α7 are obtained in 5 calculation cycles. As an example, each calculation cycle corresponds to a duration between two significant edges of a clock signal received by the general circuit.

For example, when NMUL = 8 and N = 4, in a first clock cycle, groups 14, 13, and 12 are processed, and in a second clock cycle, groups 15, 12, 16, and 1 are processed.

In the case where the number NMUL of multipliers is less than the maximum number of chunks N, the groups comprising more than NMUL are computed and processed by an additional accumulator. This accumulator is iteratively used to accumulate the partial sums of the same group, until all of the partial products are processes by the partial multipliers.

Figure 4 is a diagram illustrating the addition, by a parallel adder 500, of the intermediate sums s1 to s7 while taking into account the excess bits α2 to α7.

As an example, after their calculation, the intermediate sums s1 to s7 and associated excess bits α2 to α7 are stored in a memory architecture 502 of the general circuit.

In particular, the architecture 502 is such that the size of the internal operators is bounded based on the maximum frequency of the general circuit.

In the particular example of n-bit multipliers and adders on R*n bits for the partial sums, R being an integer, the architecture 502 comprises three rows and a number NMUL/R of columns.

As an example, for a number NMUL equal to four 64-bit multipliers and a 128-bit adder, the memory architecture 502 comprises rows A, B, and C divided into columns (col) 1 to 4. As an example, columns 1 to 3 have a width of 128 bits, or more generally, of 2n bits, and the column 4 has a width of 128 + (*yₐ + y_{b}*) bits. More generally the last column has a width of 2n+ ceil(log2(K)) bits, K being the number of elements in a group. Each intersection between a row A or B and a column (Col) k is a location noted A[k] or B[k].

As an example, intermediate sums s1, s3, s5, and s7 are stored in row A, sums s2, s4, and s6 are stored in row B and excess bits α2 to α7 are stored in row C. In particular, the 2n bits of intermediate sum s1 are stored at location A[1]. The 2n bits of intermediate sums s3, s5, and s7 are respectively stored at locations A[2], A[3], and A[4]. In particular, the intermediate sum s7 is stored as the 2n least significant bits of location A[4]. As an example, the intermediate sums s2, s4, and s6 are stored in line B to be astride two columns. The n least significant bits of intermediate sum s2 are stored in the n most significant bits of location B[1], while the n most significant bits are stored in n most significant bits of location B[2]. The n least significant bits of the intermediate sum s4 are stored as the n most significant bits of location B[2], while the n most significant bits of the intermediate sum s4 are stored as the n least significant bits of location B[3]. The n least significant bits of the intermediate sum s6 are stored as the n most significant bits of location B[3], while the n most significant bits of the intermediate sum s6 are stored as the n least significant bits of location B[4]. Generally, the intermediate sums sj, with j being an odd integer, are located on row A, while the intermediate sums sk, with k being an even integer, are located on row B. The 2n bits of each intermediate sum located on row A are located on a same column, while the intermediate sums on row B have their n least significant bits on a neighboring column of the one comprising their n most significant bits.

As an example, excess bits α2 to α7 are located on row C. Excess bits α2, α4 and α6 are respectively located on locations C[2], C[3] and C[4]. In particular α2, and respectively α4 and α6, occupy the bits n to n+size(α2), n to n+size(α4), and n to n+size(α6) of locations C[2], C[4] and C[6].The excess bits α3 and α5 are respectively located as the least significant bits of locations C[3] and C[4]. The integer bits α7 for example occupies the size (α7) -th most significant bits of location C[4].

For example, the memory implementing the architecture 502 comprises multiple read ports and multiple write ports. In another example, the architecture 502 is implemented by separates buffers. In another example, the architecture 502 is implemented by a single buffer or a single memory entity.

As an example, before the programming of the excess bits, the bits of row C are all programmed to a default value, such as the value 0. In another example, after the programming of the excess bits, all the other bits, not used by the excess bits, are set to 0.

The parallel adder 500 is then configured to generate chunks r0 to r7 as well as resulting integer bits rib.

Parallel adder 500 for example comprises 7 adders 505, 506, 506', 507, 507', 508, and 508'. Adder 500 further comprises 3 multiplexers 510, 512, and 514. Generally, when the mantissas comprise a number L of chunks, parallel adder 500 comprises 2N-1 adders and N-1 multiplexers.

Parallel adder 500 is for example configured to generate the chunks r0 to r7, for example each being coded by n bits. The parallel adder 500 is for example configured to generate chunk r7 by selecting the value stored at the n least significant bits of location A[1]. Chunk r7 then corresponds to the n least significant bits of the intermediate sum s1. Via adder 505, parallel adder 500 is configured to generate chunk r6 by adding the values stored at the n most significant bits of locations A[1] and B[1]. As an example, adder 505 is configured to generate a value coded by n+1 bits, among which the n least significant bits correspond to chunk r6 and the most significant bit is a carry bits supplied as a control bit to multiplexer 510.

The values stored at locations A[2], B[2], and C[2] are supplied to adders 506 and 506'. As an example, adder 506 is configured to calculate the sum of the n most significant bits of the intermediate sum s2, the n least significant bits of the intermediate sum s4, the 2n bits of the intermediate sum s3, and the excess bits α2.

Adder 506' is configured to calculate the sum of the values stored at locations A[2], B[2], C[2] and the value 1, corresponding to an anticipated carry bit.

In order to parallelize the addition steps, each pair of adders 506-506', 507-507' and 508-508' is configured to compute the sums of the values stored at locations A[k], B[k] and C[k], k=2, 3 and 4, with and without an anticipated carry bit. Each pair of adders is coupled to a same multiplexer 510, 512 or 514. The multiplexers 510, 512 and 514 are configured to propagate the carry bits in the result. For example, the adder 505 is configured to generate values on n+1 bits, the most significant bit being equal to 0 or 1. The adder is configured to furnish a control bit, having for value the most significant bits of the output of adder 505, to the multiplexer 510. The multiplexer 510 is then configured to select the result of adder 506'. The multiplexer 510 is configured to select the result of adder 506 if its control bit is equal to 0, and to select the result of adder 506' otherwise.

For example, adders 506 and 506' are configured to generate values on 2n+1 bits, the most significant bit being equal to 0 or to 1. The multiplexer 510 is then configured to furnish a control bit equal to the value of the most significant bit of its selected value. Multiplexer 512 is then configured to select the output of adder 507 or 507', based on the control bits furnished by multiplexer 510, etc.

As an example, adders 506 and 506' are configured to generate values coded by 2n+1 bits, the most significant bit being equal to 0 or to 1. Multiplexer 510 is then configured to generate the chunk r5 corresponding to the n least significant bits of the selected value. Multiplexer 510 is further configured to generate the chunk r4 corresponding to the bits n+1 to 2n of the selected value. The most significant bit is propagated through the multiplexers 512 and 514.

Adder 507 is configured to calculate the sum of the values stored at locations A[3], B[3], and C[3]. Adder 507' is configured to calculate the sum of the values stored at locations A[3], B[3], C[3] and the value 1, corresponding to an anticipated carry bit. The sum of the values stored at locations A[3], B[3], and C[3] corresponds to the sum of the n most significant bits of intermediate sum s4, of the n least significant bits of the intermediate sum s6, of the 2n bits of the intermediate sum s5 and of the excess bits α3 and α4. Multiplexer 512 is then configured to select the value supplied by adder 507 if the control bit, transmitted by multiplexer 510, is equal to a 0, and to select the value supplied by adder 507' if the value of the control bit is equal to = 1. The adders 507 and 507' are for example configured to generate values on 2n+1 bits, the most significant bit being equal to 0 or to 1.

Multiplexer 512 is then configured to generate the chunk r3 corresponding to the n least significant bits of the selected value. Multiplexer 512 is further configured to generate the chunk r2 corresponding to the bits n+1 to 2n of the selected value. Multiplexer 512 is further configured to supply the most significant bit of the selected value as a control bit to multiplexer 514. For example, the (2n+1)^{th} bit of the value selected by multiplexer 512 is used as selection bit for the multiplexer 514.

Adder 508 is configured to calculate the sum of the values stored at locations A[4], B[4], and C[4]. Adder 508' is configured to calculate the sum of the values stored at locations A[4], B[4], C[4] and the value 1, corresponding to an anticipated carry bit. The sum of the values stored at locations A[4], B[4], and C[4] corresponds to the sum of the n most significant bits of the intermediate sum s6, of the 2n bits of the intermediate sum s7 and of the excess bits α5, α6, and α7. Multiplexer 514 is then configured to select the value supplied by adder 508 if the control bit, transmitted by multiplexer 512, is equal to 0, and to select the value supplied by adder 508' if the value of the control bit is equal to 1. As an example, the values generated by adders 508 and 508' are coded by 2*n + yₐ + y_{b}* bits.

Multiplexer 514 is then configured to generate the chunk r1 corresponding to the n least significant bits of the selected value. Multiplexer 514 is further configured to generate the chunk r0 corresponding to the bits n+1 to 2n of the selected value. Multiplexer 514 is further configured to generate resulting integer bits rib corresponding to the most significant bits, exceeding the 2n least significant bits, of the selected value. In particular, the resulting integer bits rib encode the output integer bits.

As an example, the chunks r0 to r7, and additional value rib, are stored, after their generation, in a memory 509. As an example, the memory 509 is a register.

As an example, adders 505, 506, 506', 507, 507', 508, and 508' are configured to calculate the sums in parallel. In another example, for example implemented to reduce the size of memory 502, the additions are performed throughout by a machine when the intermediate sums are provided from the previous stage.

The implementation of the memory architecture 502 in three rows and a plurality of column is given as an example. In particular, the locations are not necessary implemented on rows and columns of a memory. The locations are such that the parallel adder 500 computes the suitable intermediate sums.

Once all the entries are computed in parallel, depending on the carry of the previous column, the correct addition, with or without carry, is selected. At this point all the chunks of the result ri, and its integer bits rib, are ready to be provided in output. All this allows to reach a throughput of one, implying a relatively high usage of the array of multipliers. However, the order of the partial products to be multiplied, as described in relation with Figures 2A and 3A, is important and it impacts the latency and throughput of the overall architecture of the general circuit.

Figure 5 shows a general circuit 600 configured for the multiplication of two mantissas, according to an embodiment of the present disclosure. In particular, circuit 600 is configured to calculate multiplications between two mantissas, each comprising N=8 chunks 606 (CHUNKS) a0 to a7 and b0 to b7 and integer bits Ia and Ib. The circuit 600 further supports all the possible permutations of *Lₐ* and *L_{b},* each from 0 to N-1. However, more generally, the person skilled in the art will understand how to extend the circuit of Figure 5 to calculate multiplications between two mantissas each comprising a different number of chunks.

Circuit 600 comprises, for example, a control unit 602 (CTRL UNIT). As an example, control unit 602 comprises a memory, for example a ROM-type memory ("Read Only Memory") storing instructions 604 (INST.). The instructions 604 are for example similar to the ones described in relation with Figure 2B. Control unit 602 is further configured to receive a clock signal (CLK). In this example, the general circuit 600 comprise a number NMUL=8 multiplier circuits 610-1 to 610-8. However, more generally, the person skilled in the art will understand how to generalize the circuit of Figure 5 to a circuit with a number NMUL of multiplier circuits, NMUL being equal to or greater than 2. Circuit 600 is configured to receive a multiplication command, for example comprising chunks 606, as an input and to forward it to control unit 602. The control unit 602 then retrieves the L_{A} and *L_{B}* fields from the chunks 606. These fields are used to compute the first address from which to read instructions 602 in the memory. The control unit 602 is, for example, configured to read the memory one line at a time from the first address computed by merging the number of valid chunks *Lₐ* and *L_{b},* until reaching a micro instruction having a flag "last instruction". In another example, the control unit 602 is configured to compute the number of micro-instructions needed by the given operation. Moreover, each micro-instruction for example comprises several fields applying to all of the pipeline. One or more fields are used to instruct an input crossbar circuit 608, which selects the correct chunks for the right correct multiplier circuits. All of the control signals transmitted by the control unit 602 are for example copied to all of the multiplier circuit inputs. Once the multiplier circuits 610-1 to 610-8 have finished their execution, one or more control signals are generated in order to control a partial product crossbar circuit 612 (PP CROSSBAR). These one or more control signals cause the valid partial product, computed by multiplier circuits 610-1 to 610-8, to be redirected to the correct adder input. Moreover, all of these control signals are copied to inputs of an adder part 615 of the circuit 600. In particular the adder part 615 comprises a plurality of adders, forming a plurality of adder trees.

The adders of the adder part 615 are for example activated if a count value in the control signal is not zero. In particular, the count value indicates how many additions are to be performed within a group before the adder part 615 is bypassed to a crossbar circuit 618 (COLUMN SUM CROSSBAR). At every adder stage of the adder part 615, the count value, within the intermediate addition results of the same group, is decremented. If an addition is completed before the bottom of the adder part 615, a bypass path is provided in order to provide the result directly to the crossbar circuit 618 without the need of continuing to the end of the adder part 615. The crossbar circuit 618 for example comprises an accumulator configured to accumulate the partial sum in the case where the number NMUL of multiplier circuits is inferior to the maximum number of chunks N. In an example, multiple adder trees are instantiated in parallel, with additional bypass ports in the case where NMUL is greater than N.

The order of calculation of the partial products, for example described in relation with Figures 2A and 3A, has an impact on the functioning of the adder part 615. Indeed, the adder part 615 is, for example, configured to process in parallel partial products from different groups.

The column sum crossbar circuit 618 is configured to receive all of the partial sums and to write them to a buffer 620 at a position specified by the control signals provided by the control unit 602. The buffer 620 comprises, for example, a finite state machine configured to count how many intermediate sums and excess bits have been written, according the architecture described in relation with Figure 4. Once they are all written, the buffer 620 for example enables an adder circuit 622, which automatically performs a parallel addition over 2 clock cycles. For example, the adder circuit 622 has the same architecture as the parallel adder 500, comprising adders and multiplexers configured to propagate the carry. In particular, the intermediate sums and excess bits are all supplied at the same time to the adder circuit 622. Once supplied to the adder circuit 622, the intermediate sums and excess bits are deleted from the buffer 620.

Once all of the additions have been performed by the adder circuit 622, an output 634 (OUTPUT) of the circuit 600 is generated and corresponds to the multiplication between the two operand A and B. In some embodiments, the adder circuit 622 is configured to generate the output 634 with an output precision determined by one or more control bits generated by the control unit 602, the precision being defined at a bit level or at a chunk level. Furthermore, the one or more control bits are for example used to mask the output of the adder circuit 622, and/or to compute an underflow bit and guard bits, for example by means of shifts, masks and/or AND-OR logic.

Generally, when the general circuit 600 comprises NMUL multiplier circuits, these NMUL multiplier circuits are configured to generate, at each cycle, NMUL partial products, each comprising for example between 2n and 2*n + yₐ + y_{b}* bits, and to furnish them to the second crossbar circuit 612.

The adder part 615 is configured to perform the addition in order to generate the intermediate sums and their excess bits, that is to say, the additions of the partial products, taking into account integer bits Ia and Ib of a same group.

In the following, reference is made to "standard adders" and "intermediate adders". The term "standard" indicates that the so-called standard adders form adder trees, while the term "intermediate" indicates that the intermediate adders form an intermediate adding circuit between the standard adders.

The adder part 615 comprises a first stage comprising NMUL/2 standard adders. In the example of Figure 5, the first stage of the adder part 615 comprises 4 standard adders 616-1 to 616-4. In particular, the adders of the first stage are grouped in pairs of standard adders. For example, standard adders 616-1 and 616-2 form a first pair and standard adders 616-3 and 616-4 form a second pair. Each pair of standard adders is coupled to a standard adder in a second stage of the adder part 615. Each standard adder of a pair is then configured to furnish its output to the standard adder in the second stage. For example, standard adders 616-1 and 616-2 are coupled to a standard adder 617-1 and the standard adders 616-3 and 616-4 are coupled to a standard adder 617-2.

Moreover, the input and output of each standard adder of the first stage, except for example the first and last standard adders 616-1 and 616-4 respectively of the first stage, are also furnished to a multiplexer. For example, the input of adder 616-2 is also furnished to a multiplexer 617-3 and the input of adder 616-3 is also furnished to a multiplexer 617-4. Two multiplexers receiving the inputs of adders from different pairs, for example neighboring pairs, are coupled to intermediate adders of the second stage. For example, multiplexers 617-3 and 617-4 are coupled to an intermediate adder 617-5. The second stage for example comprises NMUL/4 standard adders and NMUL/4-1 intermediate adders, that is to say NMUL/2-1 adders in total. Generally, the first row of adders is formed of NMUL/2 standard adders, the second row of adders is formed of NMUL/4 standard adders plus (NMUL/4)-1 intermediate adders, a i-th row of adders is formed of *NMUL*/2*ⁱ* standard adders plus (*NMUL*/*2ⁱ*) *-* 1 intermediate adders. Moreover, the adder part 615 comprises a number equal to ceil(log2(NMUL)) rows of adders.

The output of intermediate adder 615=7-5 of the second stage is furnished to two multiplexers. For example, the intermediate adder 617-5 is configured to furnish its output to multiplexers 617-6 and 617-8. Moreover, each standard adder in the second stage is configured to furnish its output to one of the multiplexers. For example, standard adder 617-1 furnishes its output to multiplexer 617-6, while standard adder 617-2 furnishes its output to multiplexer 617-7. Each pair of multiplexers is configured to furnish its outputs to an adder in a third stage, for example to a standard adder 617-8. In the particular example of Figure 5, the adder part 615 comprises three stages, the standard adder forming standard adder trees.

In the example where NMUL is greater than 8, the third stage for example comprises an alternation of standard adders and intermediate adders. The adder part 615 further comprises other stages, based on the same construction. The last stage comprises only one standard adder.

Moreover, a corresponding time barrier, for example comprising flip-flops, is positioned at the inputs of each standard and intermediate adder, each flip-flop 619 being clocked by the clock signal CLK, and providing a time barrier between two clock cycles of the clock CLK in order to provide a pipelined operation of the adder part 615. Moreover, the output of each standard and intermediate adder is additionally coupled directly to the crossbar circuit 618 via a bypass path, symbolized in Figure 5 by a dot at the output of each adder. All inputs of the adder part are also directly coupled to the crossbar circuit 618, also symbolized by a dot at the output of each time barrier placed at the input of the adder part. These dots symbolize gateways from the adder part 615 toward the crossbar circuit 618. These gateways allow to not go through the entire adder part when the partial sum to be computed is based on less additions than the total length of the adder part 615. For example, the intermediate sum s2 related group 12 only comprises the addition between partial products a3*b2 and a2*b3. For this intermediate sum, the crossbar circuit 612 is for example configured to supply the partial product a3*b2 and a2*b3 to the standard adder 616-1. The output of standard adder 616-1 is, in this example, directly the appropriate intermediate sum. Instead of supplying the expected intermediate sum to the standard adder 617-1 and adding it with a null value, the intermediate sum is directly supplied to the crossbar circuit 618.

The adder part 615 is for example capable, through the usage of the additional multiplexers and adders, to sum any selected groups of partial products.

Other implementations of the adder part 615, depending on the number NMUL of multiplier circuits, are for example possible. For example, in some cases, the adder part 615 only comprises the standard adders.

Moreover, the maximum number of clock cycles used by the adder part to perform an addition depends on the number NMUL of multiplier sub-circuits, and is for example equal to ceil (log2 (NMUL) ) .

In addition to the number of partial additions to be performed by the adder part 615, every input of the adder part 615 is associated to the group of partial products to which it belongs. This information is for example encoded by supplementary control bits that pass through the pipeline of circuit 600 in parallel with the numerical data. These supplementary control bits are for example generated by the control unit 602 and are for example updated by the crossbar circuits 612 and 618.

In particular, while passing through the adder part 615, these supplementary control bits indicate the path to be taken by the numerical data through the stages, in particular whether or not a particular value is to be supplied by a bypass path to the crossbar circuit 618.

The architecture of the adder circuit 622 is similar to the one described in relation with Figure 4. In the particular case of Figure 5, the adder part 615 generates intermediate sums s0 to s15 and associated excess bits α2 to α15. The intermediate sums and the excess bits are stored at corresponding locations in the buffer 620 in the same way as described in relation with Figure 4, that is to say in three rows and NMUL/R columns. The adder circuit 622 comprises a number of NMUL/R adders 624_1 to 624_NMUL/R. In the example of Figure 5, NMUL/R=8. The adders 624_1 to 624_NMUL/R are for example configured to sum the content of locations A[k] and B[K] in the buffer 620, for each K.

The adder circuit 622 comprises flip-flops 625_1 to 625_NMUL/R each configured to receive, at each clock cycle, the output of a corresponding one of the adders 624_1 to 624_NMUL/R. In particular, the flip-flop 625_j, *1* ≤ *j* ≤ *NMUL*/*R* is configured to receive the output of adder 624_j. The adder 622 further comprises flip-flop 626_2 to 626_NMUL/R. Each flip-flop 626_j, 2 ≤ *j* ≤ *NMUL*/*R,* is configured to receive the content of the location C[j] in the buffer 620.

Each pair of flip-flops 625_j and 626_j , 2 ≤ *j* ≤ *NMUL*/*R* has its outputs coupled to adders 628_1j and 628_2j. The adders 628_1j are configured to sum the content of the flip-flops 625_j and 626_j, that is to say, to perform the addition of the values at the buffer locations A[j]+B[j]+C[j], by reusing the value of A[j]+B[j], that is already computed by the adder 624-j. The adders 628_2j are configured to sum the output values of the flip-flops 625_j and 626_j with the value 1 corresponding to an anticipated carry bit, that is to say, to make the addition of the buffer locations A[j]+B[j]+C[j]+1.

The circuit 600 further comprises a number NMUL/R-1 of multiplexers 630_2 to 630_NMUL/R. Each multiplexer 630_j is configured to receive the output of adders 628_1j and 628_2j. Each multiplexer 630_j is further configured to furnish a control bit, equal to the most significant bit of its selected value, that is to say the 2n+1-th bit, to the multiplexer 630_(j+1). The multiplexer 630_2 is configured to receive, as a control bit, the most significant bit stored in the flip-flop 625_1. If the received control value is equal to 0, the multiplexer 630_j is configured to select the output of adder 628_1j. If the received control value is equal to 1, the multiplexer 630_j is configured to select the output of adder 628_2j.

Each multiplexer 630_j is, for example, configured to supply the selected value to a computation circuit 632 (GB+UDF CALC), which is for example configured to calculate one or more guard bit and an underflow value based on the selected values. In another example, only the guard bits, or only the underflow is computed by the circuit 632. In some examples, the guard bits and/or the underflow value are equal to 0. The computation circuit 632 for example supplies selected output values of the adders 628-12 to 628_1NMUL/R, 628-22 to 628-2NMUL/R, and the calculated guard bit and the underflow value, to a memory 634 forming part of an output interface of the circuit 600. In another example, each multiplexer 630_j is, for example, configured to directly supply the selected value to the memory 634. In this case, no guard bit and no underflow are computed. The combination of adders 628-12 to 628_1NMUL/R, 628-22 to 628-2NMUL/R with the multiplexers 630-1 to 630-8 allows to reduce the latency of the circuit 600. In another example, the adders 628_1NMUL/R, 628-22 to 628-2NMUL/R are omitted. In this example, the latency of the circuit 600 increases but there is a gain in surface area.

As an example, the memory 634 is a shift register, a Random Access memory (RAM), a flip-flop, etc. configured to receive the output of the circuit 632, which computes a final output by also generating the guard bits and/or the underflow, according to indication provided by the control unit 602. In another example, the memory 634 is configured to directly receive the outputs of each multiplexer 630-j.

As an example, the memory 634 is configured to store the result and the propagation path of the multiplication of the two mantissas supplied to the input of circuit 600. In particular, the result of the multiplication is stored in the form of a sequence of chunks of size n. The n least significant bits of the intermediate sum s1 form the chunk corresponding to the n least significant bits of the result, the next n least significant bits of the intermediate sum s1 form the chunk corresponding to the next n least significant bits of the result, and so on and so forth for the next intermediate sums.

While Figure 5 illustrates a particular example of a general circuit 600 in which the mantissas to be multiplied each comprise 8 n-bit chunks, those skilled in the art will be capable of adapting the general circuit 600, and in particular the structure of adder trees 614-1 and 614-2 as well as the structure of memory 620 and of parallel adder 622, to the general case in which the mantissas each comprise L n-bit chunks.

In an example, the multiplier sub-circuits 610-1 to 610-8 are internally pipelined. In this case, the control signals for the following stages, that are passing implicitly though the multipliers, are pipelined accordingly. In particular, the instructions 604 for example comprise supplementary information such as: the path on the adder part 615 of each partial product and/or the number of additions in the adder part 615 having to be applied on each partial product before finishing to compute the sum of the associated group; and/or the location in the buffer 620 where an intermediate sum is to be stored; and/or the number of partial sums to be stored in the buffer 620; and/or the maximum output precision to compute the guard bit and underflow, if needed.

In another example, the input crossbar 608 is replaced by multiple read ports in the memory comprising the chunks 606. The control unit 604 is configured to select the chunks to be used by the partial multipliers 610-1 to 610-8. In other words, the functionality of the crossbar circuit 608 is implemented by the combination of the memory comprising the chunks and the control unit 604.

In another example, the output of the partial multipliers 610-1 to 610-8 is directly coupled to the input of the adder part 615, for example via flip-flops. In this case, the crossbar circuit 608is omitted. Furthermore, in some embodiments, the crossbar circuit 612 is also omitted.

An advantage of the described embodiments is that the latency in the multiplication of two mantissas is decreased. Indeed, the cascade execution of the multiplier circuits and of the stages of the adder trees and the carry propagation when adding the results enable to suppress latency in the generation of the intermediate sums and of the integer bits.

Another advantage of the described embodiments and in particular of the cascaded execution of the different components of circuit 600, is that they allow the surface area of circuit 600 to be relatively low due to the use the different components in parallel, especially the re-use of the multiplier sub-circuits and of the adder part 615.

Another advantage of the described embodiments is that the multiplier circuit 600 is suitable for forming a sub-unit of a computation circuit configured to implement other multiplication algorithms such as, for example, the Karatsuba algorithm, the NNT (Number Needed to Treat) algorithm, the Toom-cook algorithm, etc. Moreover, it is suitable for other functional units like floating point units, graphic processing units (GPU), coprocessors, accelerators, etc.

Various embodiments and variants have been described. Those skilled in the art will understand that certain features of these various embodiments and variants may be combined, and other variants will occur to those skilled in the art. In particular, the executions described in relation with Figures 2A, 2C, 3A, and 3B are not limiting. In particular, those skilled in the art will be capable of adapting instructions 604 to other orders of calculation of the intermediate sums. Similarly, those skilled in the art will be capable of adapting the instructions to the general case where the general circuit comprises a number NMUL, for example, NMUL = 2, 3, 4, 8, etc., of multiplier circuits. Similarly, the length of the adder trees depends on the number of multipliers. In particular, the number of cycles necessary for the calculation of the intermediate sums by the adder part 615 is lower than or equal to log2(NMUL). The number of multiplier circuits can also be greater than the maximum number N of chunks. For example, in the case where La=0 and Lb=7, 8 partial products have to be computed, that is to say one per group. Then, no addition has to be performed by the adder part 615. The partial products are, for example, bypassed, directly after the flip-flops 619 to the column sum crossbar 618.

Finally, the practical implementation of the described embodiments and variants is within the abilities of those skilled in the art based on the functional indications given hereabove. In particular, the number NMUL of multipliers being equal to the number N of chunks is a specific case. It is possible to have a number of multipliers lower or greater than the number of chunks. In this case, an extra stage is used. This extra stage allows the propagation of the sum after the adder part 615 and is for example implemented by an extra bypass and some control logic signals to properly control the data flow. Moreover, it is possible to implement the multiplier sub-circuits in a pipelined fashion. Moreover, it is further possible to merge the internal pipeline stages, for example by removing the memory 620 and reducing the operating frequency of the circuit. Moreover, the memory comprising instructions 604 can be implemented by a Read-Only memory, or rather than being a memory, it could be implemented by a combinatorial circuit, or a finite-state-machine, that generates the appropriate control signals at its output. Moreover, different implementations of the memory buffer 620 and/or of the parallel adder 622 would be possible. Different implementations of the adder part 615 are also possible. In particular, the possible implementations of adder part 615 comprise one or more adder trees configured to perform addition operations, among one or more groups, in parallel. Moreover, examples of memories implemented by read-only memory are described, but the same functionality could be implementable by a finite state machine. Moreover, in the case NMUL < N, the crossbar circuit 618 for example comprises an accumulator configured to accumulate the partial products of a same group, and the scheduling algorithm is for example adapted accordingly. This scheduling algorithm is for example determined by the instructions 604, which are for example micro-instructions. Moreover, all the information employed by the circuit in order to pipeline the data is for example indicated by control bits. For example, these supplementary control bits are modified as they pass through the circuit 600 in parallel with the numerical data.

## Claims

1. A circuit (600) configured to perform a multiplication operation between a first value and a second value, the first and second values each comprising respectively up to a number N of chunks of n bits, n being an integer greater than or equal to 2, and the multiplication being realized within a number of clock cycles depending on the sizes of the first and second values, the circuit comprising:
- a number NMUL of multiplier sub-circuits (610-1, ..., 610-8), NMUL being an integer, the multiplier sub-circuits being configured to generate partial products, each partial product corresponding to a multiplication between one chunk among the chunks of the first value and one chunk among the chunks of the second value;
- an adder part (615) configured to generate an intermediate sum (s1, ..., s7, ..., s15) and corresponding excess bit values (**α2**, ..., **α7,** ..., **α15)** if any, based on the partial products received from the multiplier sub-circuits, each intermediate sum corresponding to the addition of a group of partial products of same significance;
- an input crossbar circuit (608) configured to select during one clock cycle at least one chunk among the chunks of the first value and at least one chunk among the chunks of the second value and to provide them to at least one of the multiplier sub-circuits;
- a control unit (602) configured to indicate, to the input crossbar circuit, which chunks to supply to which of the multiplier sub-circuits and configured to control the use of the multiplier sub-circuits and consequently the adder part by providing to the multiplier sub-circuits, during at least one clock cycle, chunks involved in partial products of different groups of partial products; and
- a parallel adder (500, 622) configured to generate a value corresponding to the product between the first and second values by adding the intermediate sums and the excess bit value generated by the adder part.

2. The circuit (600) according to claim 1, wherein the groups of partial products are not all of the same size, and wherein the control unit (602) is configured to:
- during a first clock cycle, select chunks involved in a group of partial products containing the highest number of partial products; and
- during a second clock cycle following the first clock cycle, select chunks involved in a group of partial products containing less partial products.

3. The circuit (600) according to claim 1 or 2, wherein the NMUL multiplier sub-circuits (610-1, ..., 610-8) are configured to generate the NMUL first partial products in response to the reception, by the circuit (600), of a first significant edge of a clock signal (CLK), and wherein the adder part (615) is configured to generate the first intermediate sum in response to the reception of a second significant edge of the clock signal (CLK), subsequent to the first significant edge, the NMUL multiplier sub-circuits being configured to generate second partial products in response to the reception of the second significant edge of the clock signal.

4. The circuit (600) according to any of claims 1 to 3, wherein the adder part (615) comprises one or more adder trees, each adder tree comprising an adder sub-circuit (616), and further comprising:
- a first intermediate crossbar circuit (612) configured to receive the first partial products generated by the NMUL multiplier sub-circuits (610-1, ..., 610-8) and to supply them to different inputs of the adder part (615);
- a second intermediate crossbar circuit (618) configured to receive the inputs and outputs of each adder sub-circuit of the adder part, and to provide intermediate sums to an intermediate memory (620); and
- the intermediate memory (620) configured to store the first intermediate sum and the first excess bits generated by the adder part and to supply them to the parallel adder (500, 622).

5. The circuit according to claim 4, wherein the adder part (615) is configured to generate a maximum of 2N-1 intermediate sums (s1, ..., s7, ..., s15) and 2N-2 excess bits values (**α2**, ..., α7, ..., **α15**) as a result of the reception of a number log2(NMUL) of clock signals, the intermediate memory (620) being configured to supply the 2N-1 intermediate sums and the 2N-2 excess bits values to the parallel adder, the parallel adder being configured to output the product between the first and second values by adding the 2N-1 intermediate sums and the 2N-2 excess bits values.

6. The circuit (600) according to claim 5, wherein the intermediate memory (620) comprises first, second, and third regions (A, B, C) and wherein the adder part (615) is configured to store at most a number N of intermediate sums sj, with j being an odd integer, in the first region and at most number N-1 of intermediate sums sk, with k being an even integer, in the second region and to store the excess bits values in the third region and wherein:
- the n least significant bits of an intermediate sum sk, among the at most N6& intermediate sums, stored in the second region, are stored in a same memory column as the n most significant bits of an intermediate sum sj stored in the first region, with k=j+1;
- the n most significant bits of an intermediate sum sk stored in the second region are stored on a same column memory as the n least significant bits of an intermediate sum sj stored in the first region, with k+1=j;
- excess bit values associated with an intermediate sum sk being placed in the same row as the most significant bits of an intermediate sum sk ;
- excess bits values associated with an intermediate sum sj being placed in a different adjacent row, corresponding to the row of intermediate sum sj+1; and
wherein the parallel adder comprises a plurality of sub-adders (505), each being connected to the intermediate memory for receiving the values stored in the first, second and third regions in the same column, and
at least one column of the intermediate memory is associated with two sub-adders, one no-carry-sub-adder providing the addition of the received values, and a with-carry-sub-adder providing the addition of the received values plus one, and
the outputs of the no-carry-sub-adder and the with-carry-sub-adder are connected to at least one multiplexer providing an output according to the carry signal obtained by an addition made by a sub-adder associated with another column.

7. The circuit (600) according to claim 6, wherein the control unit (602) is clocked by the clock signal (CLK) and is configured to:
- on reception of the first significant edge of the clock signal, control the input crossbar circuit (608) to supply a chunk of the first value and a chunk of the second value to a multiplier sub-circuit (610-1, ..., 610-8); and
- on reception of the second significant edge of the clock signal (CLK), subsequent to the first significant edge, cause the supply of a partial product, generated by the multiplier sub-circuit, to the adder part (615) and control the input crossbar circuit to supply another chunk of the first value and another chunk of the second value to the multiplier sub-circuit.

8. The circuit (600) according to any of claims 1 to 7, wherein the control unit (602) is configured to control the input crossbar circuit (608) directly or via the transmission of supplementary control bits comprised in the chunks of the first and second values.

9. The circuit according to any of claims 1 to 8, wherein the control unit (602) is further configured to, on reception of the first and/or of the second significant edge of the clock signal (CLK), control the input crossbar circuit (608) to supply another chunk of the first value and another chunk of the second value to another multiplier sub-circuit (610-1, ..., 610-8).

10. The circuit according to any of claims 1 to 9, wherein n is equal to at least 2 and for example to 16 or 32 or 64 or 128.

11. The circuit according to any of claims 1 to 10, wherein the integer NMUL is equal to an integer between 2 and ***N*².**

12. The circuit according to any of claims 1 to 11, wherein the adder part (615) comprises one or more adder trees each adder tree comprises standard adder circuits arranged in a tree fashion and wherein the adder part comprises intermediate adder circuits (617-5) and a plurality of multiplexers (617) placed so as to create reconfigurable adder trees configured to perform addition operations in parallel for different group of partial products.

13. A method for performing a multiplication operation between a first value and a second value, the first and second values each comprising respectively up to a number N of chunks of ***n*** bits, ***n*** being an integer greater than or equal to 2, and the multiplication being realized within a number of clock cycles depending on the sizes of the first and second values, the method comprising:
- generating partial products, each partial product corresponding to a multiplication, by a number NMUL of multiplier sub-circuits (610-1, ..., 610-8), NMUL being an integer, between one chunk among the chunks of the first value and one chunk among the chunks of the second value;
- generating, by an adder part (615), an intermediate sum (s1, ..., s7, ..., s15) and corresponding excess bit values (**α2,** ..., **α7,** ..., **α15**) if any, based on the partial products received from the multiplier sub-circuits, each intermediate sum corresponding to the addition of a group of partial products of same significance;
- selecting, by an input crossbar circuit (608) during one clock cycle, at least one chunk among the chunks of the first value and at least one chunk among the chunks of the second value and providing them to at least one of the multiplier sub-circuits ;
- indicating, by a control unit (602), to the input crossbar circuit, which chunks to supply to which multiplier sub-circuit and controlling the use of the multiplier sub-circuits and consequently the adder part by providing to the multiplier sub-circuit, during at least one clock cycle, chunks involved in partial products of different groups of partial products; and
- generating, by a parallel adder (500, 622), a value corresponding to the product between the first and second values by adding the intermediate sums and the excess bit value generated by the adder part.

14. The method according to claim 13, wherein the control unit (602) is controlled by a clock signal (CLK) and wherein the control unit is further configured to:
- on reception of a first significant edge of the clock signal, control the input crossbar circuit (608) to supply a chunk of the first value and a chunk of the second value to a multiplier sub-circuit (610-1,...,610-8); and
- on reception of a second significant edge of the clock signal, subsequent to the first significant edge:
cause the supply of a partial product, generated by the multiplier sub-circuit based on the chunks, to adder part (615); and
control the input crossbar circuit to supply another chunk of the first value and another chunk of the second value to a multiplier sub-circuit (610-1, ..., 610-8).

15. The method according to claim 13 or 14, further comprising:
- generating 2N-1 intermediate sums (s1, ..., s7, ..., s15) and of 2N-2 excess bits values (**α2,** ..., **α15**) by the adder part (615) in response to the reception of at least N clock signals, and their storage in an intermediate memory (620); and
- supplying the 2N-1 intermediate sums and the 2N-2 excess bits values to a parallel adder (622), the parallel adder being configured to generate the product between the first and second values by adding the 2N-1 intermediate sums and the 2N-2 excess bits values.
